Europäisches Patentamt

European Patent Office

Office européen des brevets

(19)

(11) Veröffentlichungsnummer : **0 026 441**
**B1**

(12) **EUROPÄISCHE PATENTSCHRIFT**

(45) Veröffentlichungstag der Patentschrift :
07.12.83

(21) Anmeldenummer : 80105729.0

(22) Anmeldetag : 24.09.80

(51) Int. Cl.³ : **F 16 B 15/00, F 16 B 23/00**

(54) **Nagel mit am Schaft ausgebildetem Drallgewinde.**

(30) Priorität : 27.09.79 DE 7927503 U
30.11.79 DE 7933843 U

(43) Veröffentlichungstag der Anmeldung :
08.04.81 Patentblatt 81/14

(45) Bekanntmachung des Hinweises auf die Patenterteilung : 07.12.83 Patentblatt 83/49

(84) Benannte Vertragsstaaten :
AT BE CH DE FR GB IT LI LU NL SE

(56) Entgegenhaltungen :
CH-A-    450 819
DD-A-    128 619
DE-A- 1 475 098
DE-A- 2 929 887
DE-C-    888 485
DE-U-67 513 70
FR-A- 2 383 350

(73) Patentinhaber : Bierbach, J. Georg
Werdohlerstrasse 23
D-5990 Altena/Westf. (DE)

(72) Erfinder : Renninger, Karl
Heedfelderstrasse 110
D-5880 Lüdenscheid (DE)

(74) Vertreter : Graf, Walter
Sckellstrasse 1
D-8000 München 80 (DE)

Jouve, 18, rue St-Denis, 75001 Paris, France

EP 0 026 441 B1

### Nagel mit am Schaft ausgebildetem Drallgewinde

Die Erfindung betrifft einen Schraubnagel laut Oberbegriff des Hauptanspruches.

Ein Schraubnagel dieser Art mit Schlagschutz ist bekannt (DE-U-67 51 370). Die oberen Flankenbereiche des in der Nagelkopfoberseite ausgebildeten Kreuzschlitzes sind hierbei so weit versenkt, dass sie durch eintreibende Werkzeuge, beispielsweise eine Hammerbahn, nicht wesentlich verformt werden. Dieser bekannte Schlagschutz ist in der Herstellung relativ kompliziert und aufwendig, es muss ein Spezialkreuzschlitz-Stempel für die Herstellung des Kreuzschlitzes in der Nagelkopfoberseite vorgesehen werden. Ausserdem ist dieser bekannte Schlagschutz nicht sehr wirksam, es besteht nach wie vor die Gefahr, dass durch Hammerschläge die Ränder der Versenkung beschädigt werden und dann der Schraubendreher nicht einwandfrei in den Kreuzschlitz eingesetzt werden kann.

Es ist Aufgabe der Erfindung, einen Schraubnagel mit Schlagschutz zu schaffen, der einerseits sehr einfach und billig herstellbar ist und bei dem sichergestellt ist, dass das Einsetzen eines Schraubwerkzeuges in die zugehörige Vertiefung nicht durch Materialverformungen der Nagelkopfoberseite beeinträchtigt ist.

Diese Aufgabe wird ausgehend von einem Schraubnagel laut Oberbegriff des Hauptanspruches durch dessen kennzeichnende Merkmale gelöst. Vorteilhafte Weiterbildungen ergeben sich aus den Unteransprüchen.

Nach der Erfindung wird der Schlagschutz durch Noppen, die über die Nagelkopfoberseite verteilt sind, gebildet, also durch Erhöhungen, die von der Nagelkopfoberseite nach oben abstehen. Die Herstellung eines erfindungsgemässen Schraubnagels ist relativ einfach und billig.

Vorzugsweise wird der Nagel noch in bekannter Weise mit einer geeigneten Gleitschicht beschichtet, um so das Verdrehen des Nagels im Dübel zu erleichtern. Um ferner noch das Wiederherausdrehen des Nagels zu erleichtern, ist es gemäss einer Weiterbildung der Erfindung vorteilhaft, das Drallgewinde unmittelbar kontinuierlich in die Nagelspitze übergehen zu lassen, so dass er im Spitzenbereich keine scharfen Kanten wie bei den bisher üblichen Nägeln dieser Art besitzt, durch welche beim Einschlagen in den Dübel dessen innere Oberfläche beschädigt werden kann. Ein solcher Nagel kann nicht nur leichter wieder aus dem Dübel herausgedreht werden sondern er kann auch sehr einfach in einem Arbeits-Walzvorgang hergestellt werden.

Zum Befestigen von Holzleisten, Dämmplatten und dgl. an Mauerwerken werden sogenannte Klemmkopfdübel benutzt. Diese Dübelart besitzt den Vorteil, dass der Dübel durch das in der Leiste oder Platte und dem dahinterliegenden Mauerwek gebohrte Loch von aussen durch die Leiste oder Platte hindurch eingesteckt werden kann und nach dem Einschlagen des Nagels in den Dübel die Leiste oder Platte durch den Dübelkopf an das Mauerwerk angepreßt wird. Durch das Drallgewinde des Nagels wird der Dübel aufgeweitet und der Nagel selbsthemmend im Dübel gehalten. Ein erfindungsgemässer Nagel ist natürlich auch für solche Zwecke bestens geeignet. Der Vorteil des nachträglichen Verdrehens und Zentrierens des Nagels im Dübel kann hierbei trotz zusätzlicher Schraubwerkzeug-Vertiefung jedoch noch nicht optimal ausgenutzt werden, wenn, wie bei Nägeln solcher Art bisher üblich, der zwischen Drallgewinde und Nagelkopf verbleibende zylindrische Nagelschaftabschnitt etwas geringeren Aussendurchmesser besitzt als das Drallgewinde und damit auch einen etwas geringeren Aussendurchmesser als der Innendurchmesser des Dübels. Dieser obere zylindrische Schaftabschnitt ist damit nach dem Einschlagen im Dübel nicht geführt und kann daher auch nicht exakt zentriert werden. Die Qualität der Dübelverbindung wird also allein dadurch bestimmt, wie der Nagelkopf auf den Dübelkopf und dieser auf die zu befestigende Leiste oder Platte einwirkt.

Gemäss einer Weiterbildung der Erfindung wird daher vorgeschlagen, unmittelbar unterhalb des Nagelkopfes am Schaft einen zusätzlichen Zentrierbund vorzusehen, der einen Aussendurchmesser von etwa dem Innendurchmesser des Dübels besitzt. Damit ist der Nagel auch mit seinem oberen Schaftabschnitt exakt im Dübel geführt und der Nagel kann damit nachträglich auch leicht verdreht und somit zentriert werden. Auf diese Weise ist es möglich, die über den Nagelkopf aufgebrachten Druckkräfte gleichmässig auf den Dübelkopf und von diesem auf die zu befestigende Leiste oder Platte einwirken zu lassen. Es können damit wesentlich bessere und haltbarere Dübelverbindungen hergestellt werden.

Die erfindungsgemässe Weiterbildung ist vor allem in Kombination mit einem erfindungsgemässen Nagel mit Schlagschutz nach den Ansprüchen von Vorteil, kann bei Bedarf aber auch für sich allein ohne Schlagschutz verwendet werden, da durch den zusätzlichen Zentrierbund der Nagel ja automatisch schon weitgehendst gut zentriert im Dübel zu liegen kommt und hierbei oftmals eine nachträgliche Verbesserung dieser Zentrierung überflüssig ist.

Die Erfindung wird im folgenden anhand einer schematischen Zeichnung an einem Ausführungsbeispiel näher erläutert, und zwar im Zusammenhang mit einer üblichen Kreuzschlitz-Vertiefung.

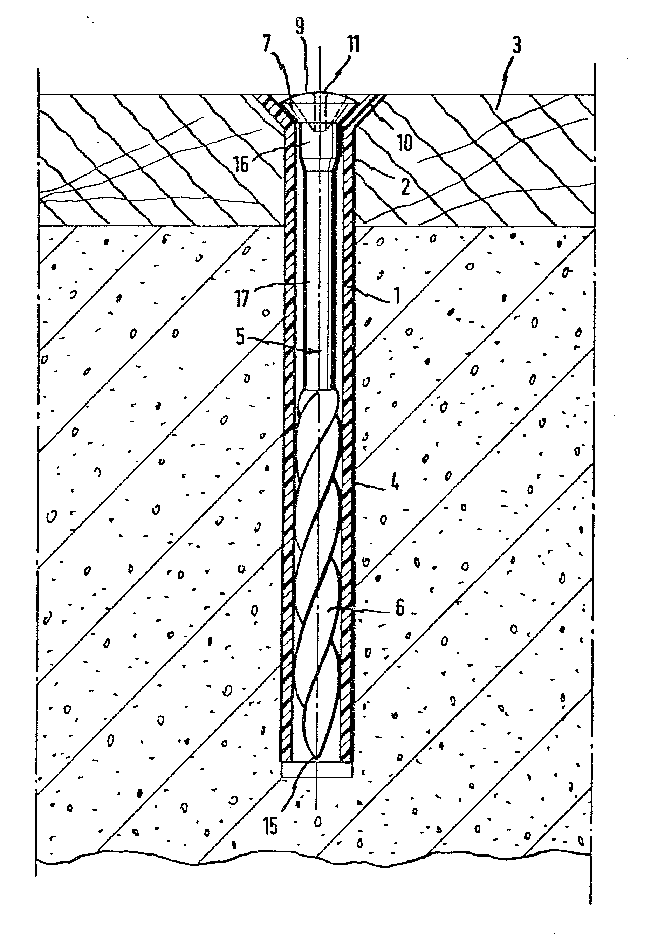

Die Figur zeigt einen sogenannten Klemmkopfdübel 1 aus Kunststoff, der von aussen durch eine Bohrung 2 in einer Holzleiste oder Platte 3 hindurch in eine entsprechende Bohrung 4 eines Mauerwerkes eingesetzt ist. In diesen Kunststoffdübel 1 ist ein Nagel 5 eingeschlagen, der in seinem unteren Bereich etwa über die Hälfte der Länge des Schaftes ein sogenanntes Drallgewinde 6 aufweist. Der Nagelkopf 7 drückt bei eingeschlagenem Nagel auf den Kopfabschnitt 10 des Dübels und somit auf die Leiste 3 und hält diese am Mauerwerk fest.

In der Oberseite des Nagelkopfes 7 ist eine nach oben offene Vertiefung 11 zum Einsetzen eines Schraubwerkzeuges ausgebildet, im gezeigten Ausführungsbeispiel ein üblicher Kreuzschlitz 11. Die Ränder dieser Schraubwerkzeug-Vertiefung 11 sind durch Erhöhungen gegen Hammerschläge geschützt, die auf der Oberseite des Nagelkopfes ausgebildet sind. Die Erhöhungen sind Noppen, die über die Oberfläche des Nagelkopfes verteilt sind.

Die Figur zeigt eine Weiterbildung des Nagels 5, die vorzugsweise zusammen mit den Noppen angewendet wird, da sie das nachträgliche Verdrehen und Justieren der Schraube erleichtert. Diese Weiterbildung kann bei Bedarf jedoch auch unabhängig von diesen Noppen von Vorteil sein, also bei einem üblichen Nagel mit glatter Kopffläche. Bei Nägeln der bezeichneten Art entspricht der Aussendurchmesser des Drallgewindes 6 etwa dem Innendurchmesser des Kunststoffdübels 1 und der zwischen Drallgewinde 6 und Nagelkopf 7 verbleibende zylindrische Schaftabschnitt 17 besitzt einen etwas geringeren Aussendurchmesser als der Drallabschnitt 6 und der Innendurchmesser des Kunststoffdübels 1. Dies resultiert aus den bei solchen Nägeln üblichen Walzherstellverfahren. Nach der erfindungsgemässen Weiterbildung ist unmittelbar unterhalb des Nagelkopfes 7 ein Zentrierbund 16 vorgesehen, dessen Aussendurchmesser etwa dem Aussendurchmesser des Gewindeabschnittes 6 und damit auch etwa dem Innendurchmesser des Dübels 1 entspricht. Dieser Bund 16 erstreckt sich einige Millimeter unterhalb des Kopfes 7 und geht über einen Kegelabschnitt in den zylindrischen dünneren Schaftabschnitt 17 über. Wenn der Nagel 5 durch Schläge auf seinen Kopf in den in die Bohrung 2 und 4 eingesetzten Kunststoffdübel 1 eingeschlagen wird, wird der Dübel durch den Gewindeabschnitt 6 aufgeweitet und der Nagel 5 selbsthemmend im Dübel gehalten. Sein Kopfabschnitt 7 drückt dann auf den entsprechend geformten Kopfabschnitt 10 des Dübels und somit auf die Leiste bzw. Platte 3 und hält diese am Mauerwerk fest. Der zylindrische Bund 16 liegt im eingeschlagenen Zustand an der Innenseite des Dübels 1 an und hierdurch wird der Nagel 5 auch in diesem oberen Bereich gegenüber dem Dübel zentriert. Damit wird gewährleistet, dass der Nagelkopf gleichmässig auf den Dübelkopf 10 drückt und eine einwandfreie Befestigung entsteht.

Das Drallgewinde 6 geht unmittelbar kontinuierlich in die Nagelspitze 15 über. Die Steigung des Drallgewindes von Gang zu Gang ist relativ flach und beträgt etwa 17 bis 18 mm. Der ganze Nagel ist vorzugsweise in bekannter Weise mit einer entsprechenden Gleitschicht aus Kunststoff überzogen, um das Einschlagen und mögliche Verdrehen durch den Kreuzschlitz zu erleichtern.

## Ansprüche

1. Schraubnagel mit einer auf seiner Nagelkopfoberseite im Bereich neben den Rändern seiner Schraubwerkzeug-Vertiefung ausgebildeten Erhöhung als Schlagschutz für die Schraubwerkzeug-Vertiefung, dadurch gekennzeichnet, dass die Erhöhung durch mehrere über die Nagelkopfoberseite verteilte Noppen gebildet ist.

2. Schraubnagel nach Anspruch 1, dadurch gekennzeichnet, dass sein Drallgewinde (6) kontinuierlich in die Nagelspitze (15) übergeht.

3. Schraubnagel nach Anspruch 1 oder 2, dadurch gekennzeichnet, dass er mit einer Gleitschicht beschichtet ist.

4. Schraubnagel nach einem oder mehreren der vorhergehenden Ansprüche zum Einschlagen in einen Klemmkopfdübel, bei dem der zwischen Kopf und Drallgewinde vorgesehene zylindrische Schaftabschnitt einen geringeren Aussendurchmesser besitzt als der Innendurchmesser des Klemmkopfdübels, dadurch gekennzeichnet, dass unterhalb des Kopfes (7) am Schaftabschnitt (17) ein kurzer Zentrierbund (16) mit einem Aussendurchmesser von etwa dem Innendurchmesser des Dübels (1) vorgesehen ist.

## Claims

1. A screw nail having an elevation formed on its nail head surface in the area next to the edges of its screwdriver depression as impact protection of the screwdriver depression, characterized in that the elevation is embodied by a plurality of knobs distributed across the nail head surface.

2. A screw nail as claimed in claim 1, characteized in that its twist thread (6) merges continuously into the nail tip (15).

3. A screw nail as claimed in claim 1 or 2, characterized in that it is coated with a slip layer.

4. A screw nail as claimed in one or more of the preceding claims, which is adapted to be driven into a clamping-head dowel and the cylindrical shaft portion which, formed between the head and the twist thread, has a smaller outer diameter than the inner diameter of the lock head dowel, characterized in that a short centering collar (16) is formed on the shaft portion (17) below the head (7) and has an outer diameter corresponding approximately to the inner diameter of the dowel (1).

## Revendications

1. Clou à vis ayant sur sa surface supérieure (7) formant la tête du clou, au voisinage des bords de la cavité (11) de l'outil à vis, un renforcement protecteur contre les coups pour la cavité de cet outil, caractérisé en ce que le renforcement est constitué par plusieurs boutons répartis sur la surface supérieure de la tête du clou.

2. Clou à vis suivant la revendication 1, caractérisé en ce que son filet de torsion (6) passe de façon continue dans l'extrémité du clou (15).

3. Clou à vis suivant l'une des revendications 1 et 2, caractérisé en ce qu'il est enduit d'une couche permettant un coulissement.

4. Clou à vis suivant l'une quelconque des revendications 1 à 3 pour enfoncer une cheville à tête de serrage (1), dans lequel le segment de tige cylindrique (17) prévu entre la tête et le filet de torsion (6) possède un diamètre extérieur plus faible que le diamètre intérieur de la cheville à tête de serrage, caractérisé en ce qu'au-dessous de la tête (7) sur la section de tige (17) est prévu un collier de centrage (16) dont le diamètre extérieur a environ le diamètre intérieur de la cheville (1).